# EUROPEAN PATENT APPLICATION

(11) **EP 2 042 257 A2**
(43) Date of publication of application: **01.04.2009**
(21) Application number: 08253114.6
(22) Date of filing: 24.09.2008
(51) Int. Cl.: B23K 9/173, B23K 9/32, B23K 9/167

(54) **Method for controlling weld quality**

(30) Priority: 26.09.2007 AU 2007905279
(71) Applicant: BOC Limited, North Ryde, NSW 2113 (AU); UNIVERSITY OF WOLLONGONG, Wollongong, NSW 2522 (AU)
(72) Inventor: Cooper, Paul, Kangaroo Valley, NSW 2577 (AU); Norrish, John, Bulli, NSW 2516 (AU); Godbole, Ajit, Wollongong, NSW 2500 (AU)
(74) Representative: Wickham, Michael

(57) **Abstract**

The present invention relates to a method for controlling weld quality. The method comprises the steps of producing a shield gas curtain (7) around the heat source (10) and producing a shroud gas curtain (16) spaced radially outward from the shield gas curtain (7), wherein the shroud gas curtain comprises a radially outward component of velocity. The shield gas curtain and the shroud gas curtain are configured to control the resultant mechanical and/or surface properties of the weld. The present invention also relates to a method for substantially confining and concentrating shield gas about the vicinity of a welding site, and a method for substantially recovering and reusing a shield gas in a welding operation.

## Description

### FIELD OF THE INVENTION

The present invention relates to welding, and in particular to a method for controlling and improving weld quality. However, it will be appreciated that the invention is not limited to this particular field of use.

### BACKGROUND OF THE INVENTION

The following discussion of the prior art is provided to place the invention in an appropriate technical context and enable the advantages of it to be more fully understood. It should be appreciated, however, that any discussion of the prior art throughout the specification should not be considered as an express or implied admission that such prior art is widely known or forms part of common general knowledge in the field.

Welding is key enabling technology in many sectors of industry. For example, Gas Metal Arc Welding (GMAW), sometimes preferred to as Metal Inert Gas (MIG) or Metal Active Gas (MAG) welding accounts for some 45% of all weld metal deposited in Australia (Kuebler. R., Selection of Welding Consumables and Processes to Optimise Weld Quality and Productivity, Proceedings of the 53rd WTIA Annual Conference, Darwin, 11-13 October, 2005). Since welding is of such industrial importance, improvements in welding methods remain a highly desirable goal.

In GMAW, the intense heat needed to melt the metal is provided by an electric arc struck between a consumable electrode and the workpiece. The welding 'gun' guides the electrode, conducts the electric current and directs a protective shielding gas to the weld. The intense heat generated by the GMAW arc melts the electrode tip, and the molten metal is transferred to the workpiece. Some of the molten metal may evaporate, and the vapour may undergo oxidation forming a fume plume containing a mixture of vapour, metal oxides, gases and other more complex compounds.

The skilled person will appreciate that the quality of the weld produced in a GMAW operation may be affected by a number of factors, including for example the degree to which ambient air is allowed to ingress into the weld zone. Since air consists of a number of gases (oxygen, carbon dioxide, nitrogen, hydrogen etc), these gases can affect the weld quality in different weld metals and in different ways. For example, hydrogen and nitrogen absorption can affect the porosity of aluminium alloy and ferritic steel welds respectively, and therefore affect the mechanical strength of the welds resulting in, for example, an increased propensity for cracking and embrittlement. Surface oxidation of the weld can also cause deleterious effects on the weld strength, not to mention unacceptance surface appearance.

In GMAW, the welding electrode used is a continuous wire, typically of high purity and may be copper plated as a means of assisting in smooth feeding, electrical conductivity, and for protecting the electrode surface from rust. Self Shielded Flux Cored Arc Welding (SSFCAW) is similar to GMAW as far as operation and equipment are concerned. However, the major difference between these welding processes relates to the electrodes. As the name suggests, SSFCAW utilises an electrode consisting of a tube containing a flux core, the electrode being in the form of a continuous wire. The flux core generates in the arc the necessary shielding without the need for an external shielding gas. Self-shielded flux-cored wires ensure good welding manoeuvrability regardless of unfavourable welding positions, such as vertical and overhead positions. Such electrodes are sometime also known as "self-shielding" flux cored electrodes or "in-air" welding electrodes.

In addition to the self-shielding, self-shielded flux cored electrodes are also typically designed to produce a slag covering for further protection of the weld metal as it cools. The slag is then manually removed by a chipping hammer or similar process. The main advantage of the self-shielding method is that its operation is somewhat simplified because of the absence of external shielding equipment.

In addition to gaining its shielding ability from gas forming ingredients in the core, self-shielded electrodes typically also contain a high level of deoxidizing and denitrifying alloys in the core. The composition of the flux core can be varied to provide electrodes for specific applications, and typical flux ingredients include the following:
- Deoxidizers such as aluminium, magnesium, titanium, zirconium, lithium and calcium.
- Slag formers such as oxides of calcium, potassium, silicon or sodium are added to protect the molten weld pool from the atmosphere.
- Arc stabilizers such as elemental potassium and sodium help produce a smooth arc and reduce spatter.
- Alloying elements such as molybdenum, chromium, carbon, manganese, nickel, and vanadium, are used to increase strength, ductility, hardness and toughness.
- Gasifiers such as fluorspar and limestone are usually used to form a shielding gas.
However, despite the inclusion of these additives into the flux core, ingress of ambient air is still a problem and the resulting weld is still subject to the issues as described above for GMAW.

Gas-tungsten arc welding (GTAW) (sometimes preferred to as Tungsten-Inert Gas (TIG) welding) and Plasma Arc Welding (PAW) are welding processes that melt and join metals by heating them with an arc established between a nonconsumable tungsten electrode and the metals. In GTAW, the torch holding the tungsten electrode may be water cooled to prevent overheating and is connected to one terminal of the power source, with the workpiece being connected to the other terminal. The torch is also connected to a source of shielding gas which is directed by a nozzle on the torch toward the weld pool to protect it from the air. PAW is similar to GTAW but in addition to the shielding gas, the torch includes an additional gas nozzle forming an orifice through which an additional shaping gaseous flow (sometimes called "orifice gas flow") is directed. This shaping gas passes through the same orifice in the nozzle as the plasma and acts to constrict the plasma arc due to the converging action of the nozzle. Whereas the tungsten electrode protrudes from the shielding gas nozzle in GTAW, it is recessed and spaced inwardly of the orifice in the gas nozzle in PAW.

Laser beam welding (LBW) is a process that melts and joins metals by heating them with a laser beam. The laser beam can be produced either by a solid-state laser or a gas laser. In either case, the laser beam can be focused and directed by optical means to achieve high power densities. During welding, ionisation by the laser beam produces a plasma, which can absorb and scatter the laser beam and significantly reduce the depth of penetration. It may therefore be necessary to remove or suppress the plasma. Plasma control gas is typically directed sideways to blow and deflect the plasma away from the beam path. A shield gas for protecting the molten metal may also be provided.

In each of the welding processes described above, the ingress of ambient contaminants into the weld zone may cause detrimental effects to the quality of the weld. For example, effects such as: an increased risks of cracking due to embrittlement, reduced mechanical properties such as toughness, and an increased risk of surface damage. Furthermore, ingress of ambient contaminants into the weld zone may also affect the welding process itself, for example the arc stability. Various attempts have been made in the prior art to improve or at least control weld quality. For example, US Patent No. 7,256,368 to Artelsmiar et al discloses a welding method involving the use of a non-consumable electrode wherein, before the actual welding process, a "start program" is performed during which the non-consumable electrode is supplied with pulsed power thereby causing the liquid molten bath to oscillate or vibrate, after which the actual welding process is carried out during which the electrode is supplied with constant power. The aim of the invention is to improve the quality of the weld seam in the starting phase of the welding process, and vibrating the melt bath is said to eliminate "weld holes" thereby improving the quality of the weld. However, this process is relatively complex, requires additional circuitry and may not be suitable for all welding processes.

In another example, as disclosed in US Patent No. 5,124,527, apparatus for arc welding is provided wherein the leading consumable electrode wire is mounted in parallel with a trailing filler wire, the latter wire being inserted into the molten metal bath. Welding current is divided between the consumable electrode wire and the filler wire. These modifications are said to improve the wettable boundary of the molten metal bath and prevent defects in the weld. However, again additional circuitry is required, the method may not be suitable for all welding processes and a skilled operator is required to operate the welding torch.

A further example is provided in US Patent No. 7,154,064 in which the rate of solidification of the molten weld is slowed by heating the area from beneath the weld thereby preventing entrainment of gas into the weld and improving the weld quality. However, a supplemental heat source is required and the method may not be suitable for all welding processes.

It is an object of the present invention to overcome or ameliorate at least one of the disadvantages of the abovementioned prior art, or to provide a useful alternative.

### DISCLOSURE OF THE INVENTION

According to a first aspect the present invention provides a method for controlling weld quality, wherein heat is delivered to a welding site from a heat source, the method comprising the steps of: producing a shield gas curtain around the heat source and producing a shroud gas curtain spaced radially outward from the shield gas curtain, wherein the shroud gas curtain comprises a radially outward component of velocity, said shield gas curtain and said shroud gas curtain being configured to control the resultant mechanical and/or surface properties of the weld. For GMAW, PAW, GTAW and LBW, preferably a shield gas port is provided which is adapted to direct the shield gas curtain around the heat source and the welding site. For SSFCAW the shield gas curtain is provided by the electrode itself. However, a shield gas port could also be used in SSFCAW for providing an additional shield gas curtain about the shield gas curtain provided by the self-shielding electrode.

The shield gas curtain and shroud gas curtain may be configured to control the resultant mechanical and/or surface properties of the weld by, for example, adjustment of the relative flow rates of the curtains and/or the relative positioning of the shroud gas curtain with respect to the shield gas curtain.

The weld quality comprises:
a.) the resultant weld mechanical properties, *i.e*. resistance to embrittlement, toughness/ductility, tensile strength and flexural strength, and/or
b.) the weld surface properties, *i.e.* such as surface oxidation (dross), surface damage, and surface appearance.

It will be appreciated that the weld quality can be controlled by affecting one or more of the following weld characteristics:
- porosity;
- discontinuities (fissures or cracks);
- weld consistency; and
- gas pickup (e.g. hydrogen and nitrogen)

The present Applicants have discovered that the method according to the present invention provides surprisingly improved shielding from atmospheric contaminants to the welding site or weld pool, and as a consequence improvements in weld quality and the actual welding process itself are expected, for example improvements in arc stability. Furthermore, the present invention provides for relatively faster welding speeds, reduced welding tolerances and for a greater range of weld geometries. The improved shielding is provided by the shroud gas curtain, which produces a somewhat bell-shaped envelope which 'contains' the primary shielding medium (shield gas) and provides the improvements in weld quality.

A further unexpected consequence of the shroud gas curtain is that the flow of gas along the surface of the workpiece is now reversed when compared to a conventional welding torch without a shroud gas curtain as described herein, and when extracting fume gas from a position radially intermediate the shroud and shield gas curtains (discussed further below). To explain, the flow of gas along the surface of a workpiece is radially outward for conventional welding torches, and is radially inward for a torch including shroud gas curtain and fume extraction. This reversal of flow assists in the containment of the shield gas in the vicinity of the weld and provides further improvements in shielding resulting in further improvements in weld quality.

As illustrated above, for GMAW applications the heat source is a metal electrode preferably in the form of a consumable welding electrode. For SSFCAW applications the heat source is a metal electrode in the form of a consumable self-shielding welding electrode adapted to generate an arc-protecting gas curtain around the arc and the weld site during use. For GTAW and PAW applications the heat source is a metal electrode in the form of a tungsten electrode, and for LBW applications the heat source is a high-energy laser beam.

The shroud gas port is preferably adapted to direct the exiting shroud gas in a substantially radially outward direction, *i.e.* generally 90° to the axis of the torch body. However, it will be appreciated that the exiting shroud gas may be directed generally between about 30° to about 90° with respect to the axis of the torch body. Preferably the exiting shroud gas is directed about 70° with respect to the axis of the torch body and in a downward direction, *i.e.* towards the work piece. The torch preferably includes an inner sleeve and an outer sleeve for defining therebetween a passage for the shroud gas, the shroud gas port being positioned at or near the distal end of the passage. Preferably both the inner sleeve and the outer sleeve circumscribe the torch.

In other embodiments the torch may include a fume gas extraction port adapted to receive fume gas from an area surrounding the welding site. The fume gas extraction port is ideally positioned radially intermediate the shield gas port and the shroud gas port, however the skilled person will appreciate that the extraction port is not limited to this position. The inner sleeve and the body or barrel of the torch define therebetween an extraction passage for fume gas extraction. Preferably the fume gas extraction port is disposed at the distal end of the extraction passage. In one embodiment the shroud gas port, shield gas port and fume gas extraction port are concentrically coaxially located at spaced relationship about the welding electrode/heat source.

In certain embodiments, it will be appreciated that fume extraction from the vicinity of the weld enhances the weld quality improvements provided by the present invention, whether the fume extraction is employed as described above (*i.e*. radially intermediate the shield gas port and the shroud gas port), or remote from the welding site. In one configuration, the present Applicants contemplate the use of a separate fume extraction system from the torch. For example, the fume extraction system may comprise a port, which is positionable by the welding operator such that the port's inlet is adjacent the welding site.

The shroud gas port and the shield gas port are preferably circular in transverse cross-section. However, this type of arrangement is not critical to the design or functionality of the ports. For example, ports that are annular in transverse cross-section may be possible. One or more of the shield gas port, shroud gas port and fume gas extraction port may optionally include a plurality of sub-ports.

The Applicants have found that by introducing a radially outward component of velocity to the shroud gas the shroud gas curtain tends to form an envelope around the welding site, effectively isolating and separating the welding site from its surroundings and thereby acting as a barrier to atmospheric contaminants entering the vicinity of the weld. As a result, the residence time of the shielding gas in the vicinity of the weld tends to be increased. This barrier reduces the tendency for adverse physical or chemical reactions between the weld metal and any atmospheric contaminants. Further, by extracting fume, preferably at a position radially intermediate the shield and shroud gas curtains the direction of flow along the face of the work being welded is radially inwards, whereas in the absence of the additional shroud gas port and the shrouding gas this flow (the 'wall jet') continues in a radially outward direction. In other words, the wall jet flow is substantially contained when fume is extracted and a shroud gas curtain is provided as described herein. In conventional arrangements, the outward wall jet provides a significant escape path for the fume. However, by reversing the direction of the wall jet the escape path is substantially reduced in significance, if not eliminated.

The exiting shroud gas may be considered as a "radial gas jet" forming an "aerodynamic flange" about the welding torch and the welding site. It will be appreciated that the shroud gas port as described herein provides for more efficient use of the shielding gas leading to the associated improvements in the weld quality, as described above.

It will also be appreciated that the provision of a shroud gas port as described herein, which tends to separate the welding site from its surroundings, also enables improved fume extraction efficiency since any fume gas is now substantially contained in an envelope and can be extracted *in situ*.

In preferred embodiments the shroud gas port is adapted such that the exiting shroud gas is produced as a relatively thin "curtain" radiating away from the torch. However, in alternative embodiments the shroud gas port is adapted such that the exiting shroud gas is produced as an expanding "wedge" of gas radiating from the torch.

It will be appreciated that the particular configuration of the shroud gas port and shield gas port as described herein can be arranged so as to minimise turbulent flow of the shielding gas in the vicinity of the welding site, thereby affecting the welding process and, as a consequence, the weld quality.

In one embodiment, at least the shroud gas port is axially adjustable relative to the shield gas port for allowing the welding operator to fine-tune the welding process. For example, to optimise arc length or reduce spatter, thereby affecting the quality of the weld. The fume extraction efficiency may also be optimised by axial adjustment of the shroud gas port. The torch may also include control means to control the flow rates of the shield gas, the shroud gas and the rate of fume gas extraction (if applicable).

For SSFCAW applications the self-shielding welding electrode is preferably a consumable flux-cored type electrode. In preferred embodiments the flux includes carbonates and the arc-protecting gas curtain includes CO₂. The carbonates may be chosen from the group consisting of CaCO₃, BaCO₃, MnCO₃, MgCO₃. SrCO₃ and mixtures thereof. The flux may also include at least one alkaline earth fluoride such as CaF₂. The flux may further include at least one of the following elements: aluminium, magnesium, titanium, zirconium, lithium and calcium.

In GMAW and FCAW applications improved shielding resulting from the use of the shroud gas port according to the present invention leads to a reduction in the ingress of ambient air (containing oxygen, nitrogen, hydrogen etc.) and as a result at least the following quality improvements have been found: reduced porosity in aluminium alloys (due to reduced hydrogen absorption), reduced porosity in ferritic steels (due to reduced nitrogen absorption), reduced surface oxidation in austenitic stainless steels, reduced risk of hydrogen assisted cracking in ferritic steels, reduced risk of nitrogen pick up and reduced toughness in ferritic steels. Furthermore, the present Applicants have discovered that in GMAW, GTAW, PAW and LBW of coated steels the shroud gas curtain can be used to suppress coating evaporation and therefore reduce the subsequent adverse effects on arc stability, tungsten damage (in GTAW) and optical component damage (in LBW).

Other welding quality improvements have been found in, for example, GTAW, LBW and PAW, wherein the improved shielding reduces the ingress of ambient contaminants and reduces surface oxidation on, for example, stainless steels. Further, reactive metals such as titanium and its alloys are subject to embrittlement if exposed to the ambient atmosphere at elevated temperatures. For this reason it is common to weld in a glove box or to use a trailing shield of inert gas to protect the cooling weld metal and the heat affected zone of the parent plate. This trailing shield restricts the welding operation and is often designed to suit each individual application. The present invention therefore eliminates the need for a trailing shield. Further, the present invention, which is more compact and flexible than prior art welding methodologies, could be relatively easily adopted for different application geometries, e.g. robotic welding, as the person skilled in the art would readily appreciate.

The shield gas and/or the shroud gas are preferably chosen from the group consisting of: nitrogen, helium, argon, carbon dioxide or compounds and mixtures thereof. However, it will be appreciated that any commercially available shield gas may be used for either the shroud or shield gas. Since the shield gas provides substantial shielding of the weld pool from atmospheric contamination, compressed air may be used for the shroud gas in some circumstances. It will be appreciated that the resultant mechanical and/or surface properties of the weld are also controllable by adjustment of the relative compositions of the shroud gas curtain and the shield gas curtain depending on the welding technique and conditions being employed.

The shield gas flow rate may be about 5 to 50 L/min and the shroud gas flow rate about 1 to 50 L/min. If fume is being extracted, the fume is preferably extracted from a location intermediate the shield gas curtain and the shroud gas curtain at a flow rate of between about 5 to 50 L/min. Typically the fume gas extraction flow rate is similar to the shielding gas flow rate, which the Applicant has surprisingly found is an order of magnitude less than conventional fume extract systems to provide the same degree of fume extraction as prior art devices. The ratio of the shield gas flow rate:shroud gas flow rate may be between about 1:0.2 to about 1:10, such as 1:0.2, 1:0.4, 1:0.6,1:0.8, 1:1, 1:1.2, 1:1.4, 1:1.6, 1:1.8, 1:2, 1:2.2, 1:2.4, 1:2.6, 1:2.8, 1:3, 1:3.2, 1:3.4, 1:3.6, 1:3.8, 1:4, 1:4.2, 1:4.4, 1:4.6, 1:4.8, 1:5, 1:5.2, 1:5.4, 1:5.6, 1:5.8, 1:6, 1:6.2, 1:6.4, 1:6.6, 1:6.8, 11:7, 1:7.2, 1:7.4, 1:7.6, 1:7.8, 1:8, 1:8.2, 1:8.4, 1:8.6, 1:8.8, 1:9, 1:9.2, 1:9.4, 1:9.6, and 1:9.8. It will be appreciated that the gas flow rates and/or extraction rate may be chosen depending on the particular welding process, for example the shroud gas flow rate may be between 5 to 15 L/min for GTAW and 15 to 50 L/min for GMAW.

Optionally the shroud gas and/or said shield gas is cooled sufficiently to promote fume gas condensation or improved control over the arc temperatures and thereby influence or control the weld quality. Cooling may be achieved by refrigeration of the shroud/shield gas or adiabatic expansion of the shroud/shield gas exiting the shroud/shield gas port. However, as will be appreciated any method of gas cooling would be suitable. For example, in GMAW and FCAW the radial gas may be modified to increase its cooling potential using CO₂ or deliberately inducing adiabatic cooling in order to reduce surface damage in coated materials or reduce surface oxidation *e.g*. on stainless steel. In other embodiments at least a portion of the shroud gas and/or the shield gas includes a component reactive with a welding fume and/or a UV light-absorbing component.

According to a second aspect the present invention provides a method for substantially confining and concentrating shield gas about the vicinity of a welding site, wherein heat is delivered to a welding site from a heat source, the method comprising the steps of: producing a shield gas curtain around the heat source and producing a shroud gas curtain spaced radially outward from the shield gas curtain, wherein the shroud gas curtain comprises a radially outward component of velocity, the shield gas curtain and the shroud gas curtain being configured to substantially confine and concentrate the shield gas about the vicinity of the weld site.

According to a third aspect the present invention provides a method for substantially recovering and reusing a shield gas in a welding operation, wherein heat is delivered to a welding site from a heat source, the method comprising the steps of: producing a shield gas curtain around the heat source and producing a shroud gas curtain spaced radially outward from the shield gas curtain, wherein the shroud gas curtain comprises a radially outward component of velocity, and extracting gas from a position radially intermediate the shield gas curtain and the shroud gas curtain, wherein said extracted gas is at least partially recycled into the shield gas curtain and/or the shroud gas curtain.

It will be appreciated that the provision of a shroud gas port providing a shroud gas curtain according to the present invention substantially confines the shield gas into an approximately bell-shaped envelope surrounding the weld pool. The present Applicants have found that substantially confining and concentrating the shield gas in this approach provides various weld quality improvements due the steady build up of shield gas around the weld site during a welding operation. It will also be appreciated that the apparatus and method of the invention enables recovery of the shield gas, which may be extracted from the weld site (as described above) and optionally purified and recycled. This may be especially important when welding with relatively expensive shield gases, such as helium, for example in laser welding. It will also be appreciated that recovered shield gas may be directly recycled or mixed with "fresh" gas. A sensor for the particular shield gas being employed may be installed and fresh gas automatically introduced into a flow of recycled gas in order to maintain a threshold concentration at the weld site. Alternatively, an oxygen sensor could be used to control the amount of fresh gas fed into the recycle stream. In other embodiments, the recycled shield gas may be used as the source of the shroud gas. Of course it will be appreciated that if the shield is being extracted from the vicinity of the weld at a greater rate than its supply then there will be little or no concentration increase.

The present Applicants have also found that the present invention provides improved control over the weld bead temperature during welding, which is highly desirable in various welding applications, thereby affecting the weld quality. This may be achieved by the choice of shield and shroud gases and their relative flow rates. To explain, in GMAW utilising carbon dioxide as the shield gas and/or the shroud gas tends to increase the plate heating and increases the effective heat about the electrode. Carbon dioxide forms a hot weld which may result in hight splattering. Shield gas, such as argon or helium, forms a colder weld which may result in poor weld bead. The judicious combination of these two gasses during welding may complement one another to create a desirable welding environment and control over the weld quality and/or welding process.

The present Applicants have also found that the present invention provides for reduced gas consumption due to improved shielding efficiency. Further, the present Applicants have found that the present invention provides for reduced fume production rates, since there is less chance for metal vapour to react with atmospheric contaminants.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to".

Other than in the operating examples, or where otherwise indicated, all numbers expressing quantities of ingredients or reaction conditions used herein are to be understood as modified in all instances by the term "about". Any examples are not intended to limit the scope of the invention. In what follows, or where otherwise indicated, "%" will mean "weight %", "ratio" will mean "weight ratio" and "parts" will mean "weight parts".

### BRIEF DESCRIPTION OF THE DRAWINGS

Preferred embodiments of the invention will now be described, by way of example only, with reference to the accompanying drawings in which:
Figure 1 is a partly cut-away side view of prior art welding apparatus;
Figure 2 is a sectional side view of apparatus configured for GMAW and adapted to control weld quality according to the method of the present invention;
Figure 3 is a view similar to Figure 2 but including a fume gas extraction port;
Figure 4 is a sectional side view of apparatus configured for SSFCAW and adapted to control weld quality according to the method of the present invention; and
Figure 5 is a sectional side view of apparatus configured for GTAW and adapted to control weld quality according to the method of the present invention.

### DEFINITIONS

In describing and claiming the present invention, the following terminology will be used in accordance with the definitions set out below. It is also to be understood that the terminology used herein is for the purpose of describing particular embodiments of the invention only and is not intended to be limiting. Unless defined otherwise, all technical and scientific terms used herein have the same meaning as commonly understood by one having ordinary skill in the art to which the invention pertains.

The terms "welding site" and "welding zone" may be used interchangeably herein, and the terms "fume" and "fume gas" are also used interchangeably herein. Fume gas is intended to not only refer to the gaseous products emanating from the welding process but also the fine particular matter which is also produced, such as metal dust. The term "welding" as discussed herein also includes "hard surfacing", which is a process in which weld metal is deposited to repair a surface defect rather than to join two pieces of metal together.

### PREFERRED EMBODIMENT OF THE INVENTION

Throughout the figures presented herein like features have been given like reference numerals. Further, as will be appreciated the arrows in the Figures that represent gas flows present simplified versions of the gas flow regimes.

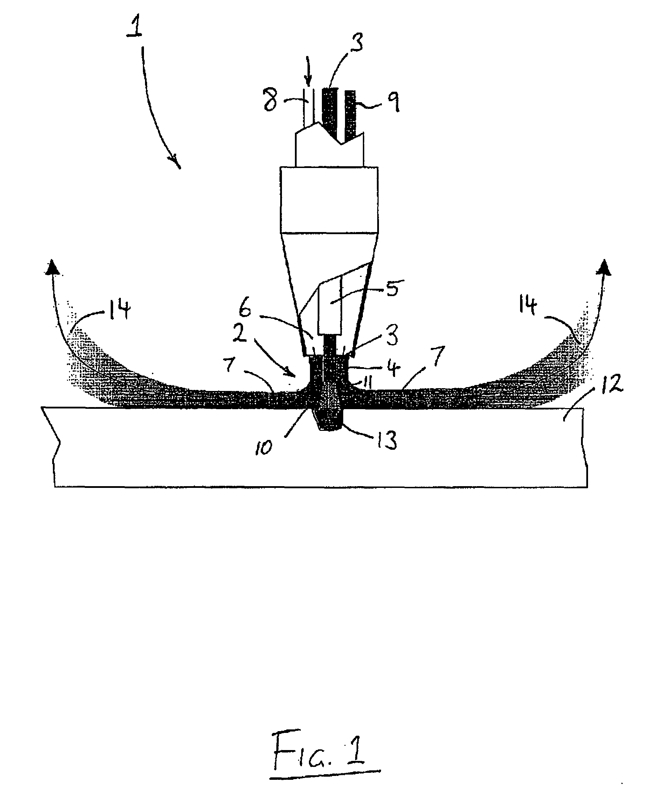

Referring initially to Figure 1, a conventional GMAW torch 1 is shown comprising a heat source adapted to provide heat to welding site 2 from a consumable welding electrode 3. In the GMAW process the welding electrode 3 is a continuous welding wire 4 which is generally guided by a contact tube 5. A shield gas port 6 is also provided for passage of shield gas. The shield gas port 6 is adapted to direct a shield gas curtain 7 around the electrode 3 and the welding site 2 such that the shield gas curtain 7 closely surrounds the electrode 3. The welding wire 4 may include a fluxed core (not shown) and can be used with or without the shield gas curtain 7. The shield gas port 6 includes an upstream shield gas inlet 8, which is adapted for attachment to a suitable source of shield gas. The GMAW torch 1 also includes an electrical current conductor 9.

In use, a welding are 10 is struck between the tip 11 of the welding electrode 3 and the work being welded 12. As a result, molten weld metal is transferred from the welding electrode 3 to a weld pool 13 that forms on the work being welded 12. Because of the high temperature environment, convection currents are created. In a conventional gas-shielded welding process, as best shown in Figure 1, the Applicants have discovered that forced convection generates a buoyant "wall jet" along the horizontal surface of the work being welded 12, which jet radiates outwards from the welding torch 1 and that buoyancy-driven, *i.e*. natural, convection causes a fume-laden thermal plume 14 to be formed.

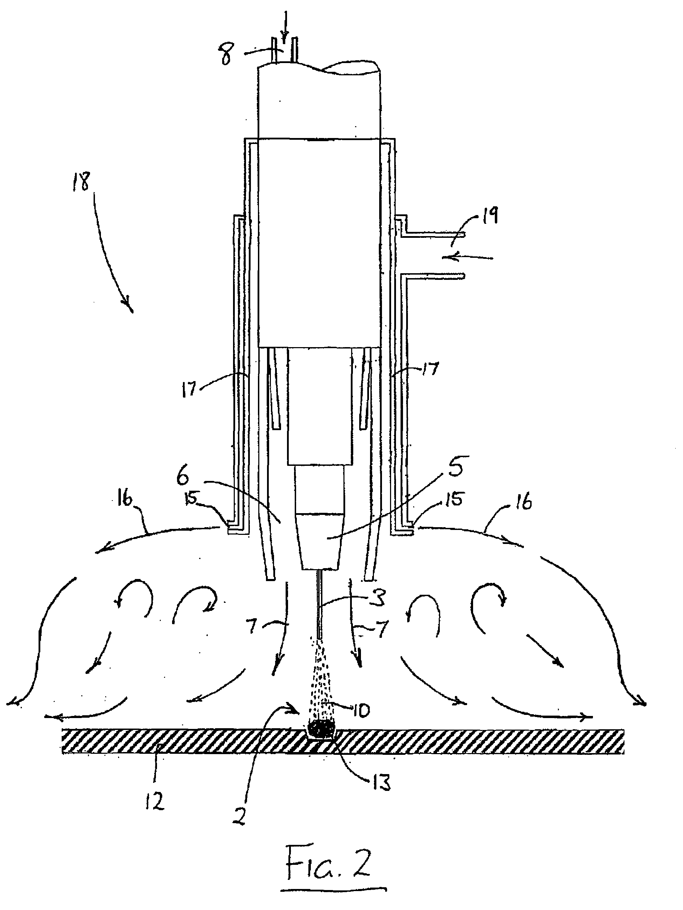

The conventional GMAW torch shown in Figure 1 has been configured to control weld quality in accordance with the method according to the present invention, as best shown in Figure 2. To explain, the torch of Figure 1 has been adapted to include a shroud gas port 15 which is adapted to impart to an exiting shroud gas 16 a radially outward component of velocity. An outer sleeve 17 is spaced radially outward from the welding electrode 3 and is provided for passage of the shroud gas 16. The outer sleeve 17 terminates in the shroud gas port 15. Preferably the shroud gas port 15 faces radially outward to the longitudinal axis of the torch 18 to direct the exiting shroud gas curtain 16 in a substantially radially outward direction, thereby forming an "aerodynamic flange" about the welding site 2. An upstream shroud gas inlet 19 is provided which is adapted for attachment to a suitable source of shroud gas for supplying the shroud gas port 15. Preferably the shroud gas port 15 is axially positioned above the distal end of the contact tube 5 by a distance in the order of about 1 cm to allow "line of sight" for the welding operator.

The method of the present invention provides for the control of the weld quality by suitably configuring the shield gas curtain the shroud gas curtain. For example the resultant mechanical and/or surface properties of the weld may be effected by adjustment of the relative flow rates of the curtains and/or the relative positioning of the shroud gas curtain with respect to the shield gas curtain. The weld quality comprises the resultant weld mechanical properties, *i.e.* resistance to embrittlement, toughness/ductility, tensile strength and flexural strength, and/or the weld surface properties, *i.e*. such as surface oxidation (dross), surface damage, and surface appearance.

The improvements in weld quality are provided by the reduction in atmospheric contaminants reaching the welding site or weld pool, which is achieved by providing improved shielding to the welding site, which is effected by the provision of the additional shroud gas curtain. To explain, the shroud gas curtain produces a somewhat bell-shaped envelope which 'contains' the primary shielding medium (shield gas).

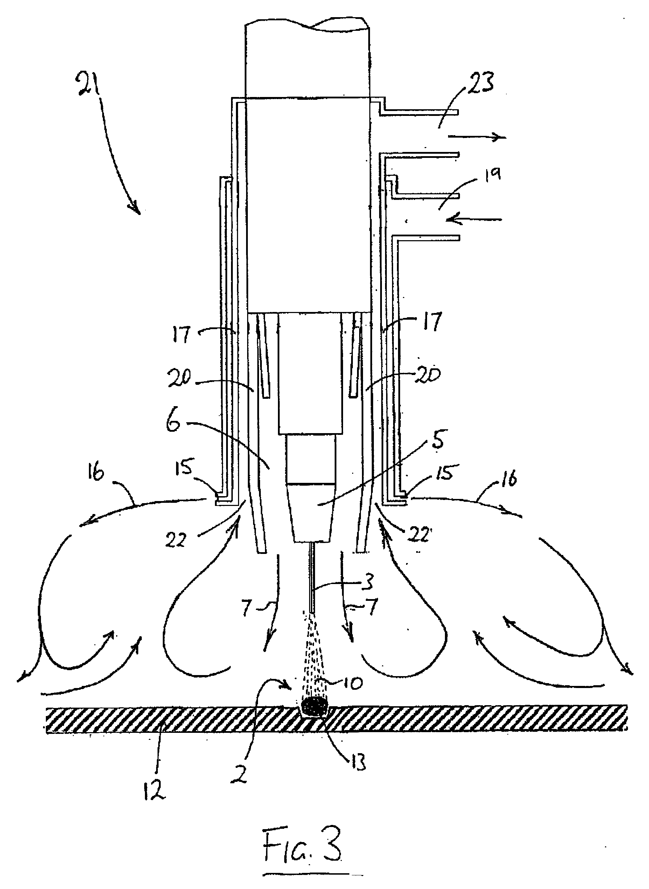

Referring now to Figure 3, the GMAW torch as shown in Figure 2 has been converted to include on-torch extraction, which is contemplated to enhance the weld quality improvements provided by the method of the invention since, as described above, the combined effect of the shroud gas curtain and fume extraction causes a reversal of the flow of gas along the surface of the workpiece when compared to a conventional welding torch. This reversal of flow assists in the containment of the shield gas in the vicinity of the weld and enables improved shielding resulting in further improvements in weld quality. An inner sleeve 20 is provided to define a fume gas extraction passage between the inner sleeve 20 and the body or the barrel of the torch 21. The extraction passage terminates at its distal end at a fume gas extraction port 22 adapted to receive fume gas from the area surrounding the welding site 2. The extraction port 22 is positioned radially intermediate the shield gas port 6 and shroud gas port 15. The fume gas may be extracted through the fume extraction port 22 by connecting the port to any suitable source of extraction via the downstream fume gas extraction outlet 23.

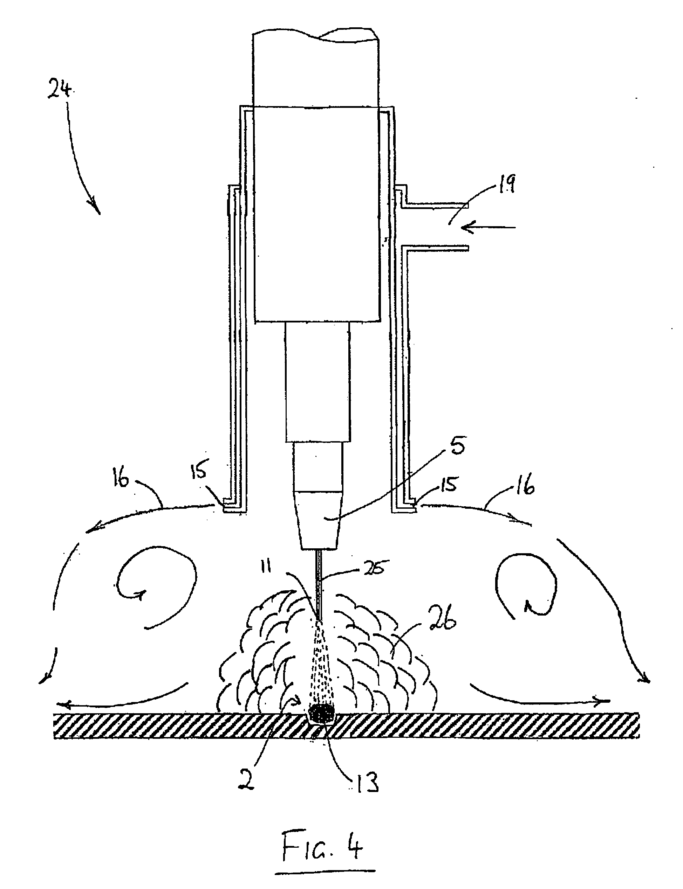

Referring now to Figure 4, a torch 24 using a continuous, consumable, self-shielding flux-cored type welding electrode 25 is shown which is configured for the present invention. In operation, the flux core at the tip 11 of the welding electrode 25 generates a gas which forms an arc-protecting gas curtain 26 around the welding electrode 25 and the weld site 2. The welding electrode flux includes metal carbonates thereby providing CO₂ in the arc-protecting gas curtain 26. The carbonates may be chosen from the group consisting of CaCO₃, BaCO₃, MnCO₃, MgCO₃, SrCO₃ and mixtures thereof. The flux also includes at least one alkaline earth fluoride, which may be CaF₂ (fluorspar), and may also include at least one of the following elements: aluminium, magnesium, titanium, zirconium, lithium and calcium for deoxidation and/or denitrification of the weld. In this Figure, the shield gas port of the previous Figure has been "removed" since the welding electrode 25 provides the arc-protecting gas curtain 26. However, it will be appreciated that a shield gas port could also be employed to provide additional shielding of the welding site 2.

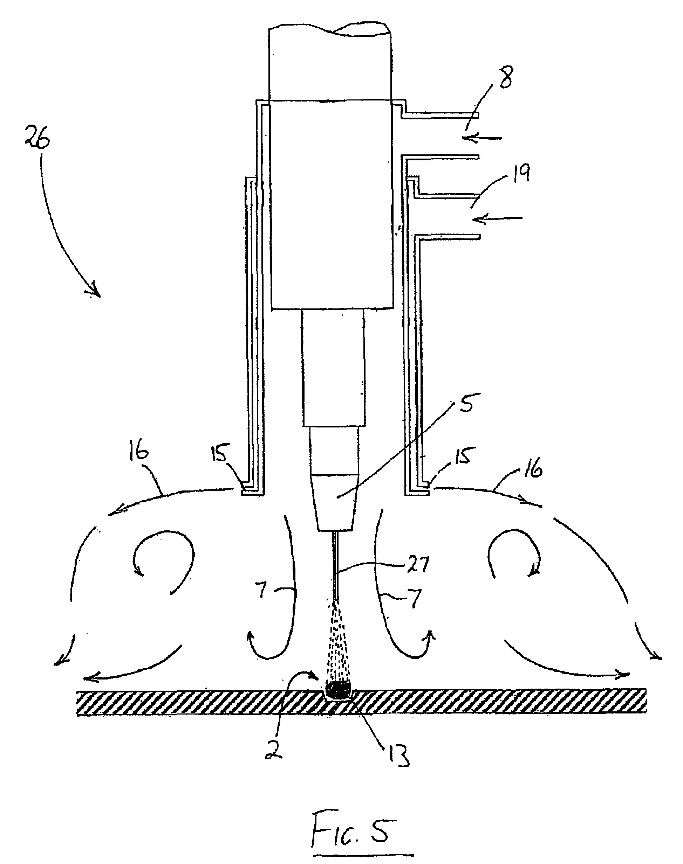

A welding torch 26 for use in GTAW is shown in Figure 5 comprising a tungsten welding electrode 27. In operation, welding torch 26 delivers an electric arc 10 between the tip 11 of the tungsten electrode 27 and the work 12 to be welded to heat the weld 13. It will be appreciated that welding torches for PAW and LBW could also be adapted to include a shroud gas port, similarly to the torches as shown in Figures 2 to 5.

As mentioned previously, introducing a radially outward component of velocity to the shroud gas substantially contains the primary shielding medium (shield gas) providing improvements in shielding and improvements in weld quality. In other words, the shroud gas curtain tends to form an envelope around the welding site, effectively isolating and separating the welding site from its surroundings and thereby acting as a barrier to atmospheric contaminants entering the vicinity of the weld. Further, by extracting fume as described herein the wall jet flow is reversed, thereby providing further improvements in shielding and hence further improvements in weld quality.

The present invention also provides a method for substantially confining and concentrating shield gas about the vicinity of a welding site. This is achieved by configuring the shield gas curtain and the shroud gas curtain by adjusting the relative and total flow rates of the shield gas curtain and the shroud gas curtain and their relative axial positions. The present invention further provides a method for substantially recovering and reusing a shield gas in a welding operation by extracting gas from a position radially intermediate the shield gas curtain and the shroud gas curtain, as best shown in Figure 3. The extracted gas may be at least partially recycled into the shield gas curtain and/or the shroud gas curtain.

Although the invention has been described with reference to specific examples, it will be appreciated by those skilled in the art that the invention may be embodied in many other forms.

## Claims

1. A method for controlling weld quality, wherein heat is delivered to a welding site from a heat source, the method comprising the steps of: producing a shield gas curtain around said heat source and producing a shroud gas curtain spaced radially outward from said shield gas curtain, wherein said shroud gas curtain comprises a radially outward component of velocity, said shield gas curtain and said shroud gas curtain being configured to control the resultant mechanical and/or surface properties of said weld.

2. A method according to claim 1 wherein the resultant mechanical and/or surface properties of the weld are controllable by adjustment of the relative flow rates of said curtains and/or the relative positioning of said shroud gas curtain with respect to said shield gas curtain.

3. A method according to claim 1 or claim 2 wherein said resultant weld mechanical properties are selected from the group consisting of: resistance to embrittlement, toughness/ductility, tensile strength and flexural strength.

4. A method according to any one of the preceding claims wherein said weld surface properties are selected from the group consisting of: surface oxidation, surface damage, and surface appearance.

5. A method according to any one of the preceding claims wherein said heat source is a metal electrode.

6. A method according to claim 5 wherein said metal electrode is a consumable welding electrode for GMAW applications or a tungsten electrode for GTAW or PAW applications.

7. A method according to any one of claims 1 to 6 wherein a shield gas port is provided for producing said shield gas curtain around said heat source when GMAW, PAW, GTAW or LBW welding, and

8. A method according to any one of claims 1 to 4 wherein said metal electrode is in the form of a consumable self-shielding welding electrode adapted to generate an arc-protecting gas curtain around the arc and the welding site during use in SSFGAW applications.

9. A method according to any one of claims 1 to 4 wherein said heat source is a high energy laser beam.

10. A method according to any one of the preceding claims including the step of directing said exiting shroud gas in a substantially radially outward direction.

11. A method according to any one of the preceding claims including the step of extracting fume gas from an area surrounding said welding site.

12. A method according to claim 11 including the step of extracting fume gas from a position radially intermediate said shield gas curtain and said shroud gas curtain.

13. A method according to any one of the preceding claims including the step of cooling said shroud gas and/or said shield gas sufficiently to promote fume gas condensation

14. A method according to any one of claims 18 to 26 wherein the resultant mechanical and/or surface properties of the weld are controllable by adjustment of the relative compositions of the shroud gas curtain and the shield gas curtain.

15. A method for substantially confining and concentrating shield gas about the vicinity of a welding site, wherein heat is delivered to said welding site from a heat source, the method comprising the steps of: producing a shield gas curtain around said heat source and producing a shroud gas curtain spaced radially outward from said shield gas curtain, wherein said shroud gas curtain comprises a radially outward component of velocity, said shield gas curtain and said shroud gas curtain being configured to substantially confine and concentrate said shield gas about the vicinity of said weld site.

16. A method for substantially recovering and reusing a shield gas in a welding operation, wherein heat is delivered to a welding site from a heat source, the method comprising the steps of: producing a shield gas curtain around said heat source and producing a shroud gas curtain spaced radially outward from said shield gas curtain, wherein said shroud gas curtain comprises a radially outward component of velocity, and extracting gas from a position radially intermediate said shield gas curtain and said shroud gas curtain, wherein said extracted gas is at least partially recycled into said shield gas curtain and/or said shroud gas curtain.

17. A method according to claim 29 including the step of purifying said recovered shield gas prior to reuse.
